# FASCICULE DE BREVET EUROPEEN

(11) **EP 1 984 424 B1**
(45) Date de publication et mention de la délivrance du brevet: **16.05.2018**
(21) Numéro de dépôt: 07731638.8
(22) Date de dépôt: 16.02.2007
(51) Int. Cl.: C08G 69/40, C08G 81/02, C08G 69/44

(54) **COPOLYMERES COMPORTANT DES BLOCS POLYAMIDE ET DES BLOCS POLYETHER, AYANT DES PROPRIETES MECANIQUES AMELIOREES**
COPOLYMEREN ENTHALTEND POLYAMID- UND POLYETHERBLOCKEN, MIT VERBESSERTEN MECHANISCHEN EIGENSCHAFTEN
COPOLYMERS COMPRISING POLYAMIDE BLOCKS AND POLYETHER BLOCKS AND HAVING IMPROVED MECHANICAL PROPERTIES

(30) Priorité: 16.02.2006 FR 0601355; 21.03.2006 US 784350 P
(43) Date de publication de la demande: 29.10.2008
(73) Titulaire: ARKEMA FRANCE, 92700 Colombes (FR)
(72) Inventeur: MALET, Frédéric, F-76000 Rouen (FR)
(86) Numéro de dépôt international: PCT/FR2007/050813
(87) Numéro de publication internationale: WO 2007/093750

(56) Documents cités:
- WO-A-03/050159
- WO-A-2004/037898
- FR-A1- 2 273 021
- US-A- 4 820 796
- US-A1- 2002 018 866

## Description

La présente invention porte sur de nouveaux copolymères comportant des blocs polyamide (abrégé bloc PA) et des blocs polyéther (abrégé bloc PE) ayant des propriétés optiques et/ou mécaniques améliorées. De tels copolymères à blocs sont également appelés polyéthers bloc amides (abréviation PEBA).

Les copolymères PEBA de l'invention appartiennent à la classe particulière des polyétheresteramides lorsqu'ils résultent de la copolycondensation de séquences polyamide à extrémités carboxyliques réactives avec des séquences polyéther à extrémités réactives, qui sont des polyétherpolyols (polyétherdiols), les liaisons entre les blocs polyamide et les blocs polyéther étant des liaisons ester ou encore à la classe des polyetheramides lorsque les séquences polyéther sont à extrémités amine.

Le document EP1500684 fait état de compositions élastomériques antistatiques comprenant un copolymère PEBA comprenant des blocs PE essentiellement en PEG et des blocs PAX.Y avec X une diamine aliphatique comme par exemple l'hexaméthylène diamine et des diamines en C9 à C25 et Y un diacide aliphatique en C9 à C25. Ces copolymères à propriétés antistatiques n'entrent pas dans le champ de notre invention et sont, bien entendu, exclus en tant que tels.

Le document EP1262527 concerne une composition de polymères antistatiques comprenant un PEBA de type PAX.Y avec comme diamine aliphatique X : l'hexaméthylènediamine, la dodécaméthylènediamine et la triméthylhexaméthylène diamine et comme diacide aliphatique Y : les acides butanoique, adipique, azélaique, subérique, sébacique, dodécanedicarboxylique, les acides gras dimérisés et les polyoxyalkylènes alpha, oméga diacides. Les blocs PE en PEG, confèrant les propriétés antistatiques au copolymère et à la composition, peuvent être utilisés avec des blocs PPG voir avec des blocs PTMG. Ces copolymères n'entrent pas dans le champ de notre invention et sont, bien entendu, exclus en tant que tels.

Le document WO03/050159 divulgue des PEBA avec comme segment dur un bloc PAX.Y avec X une diamine aliphatique linéaire contenant de 4-14 atomes de carbone et Y un diacide aliphatique linéaire contenant de 4 à 14 atomes de carbone et avec du PO3G en tant que segment mou, ce dernier pouvant comprendre jusqu'à 60% en poids d'un autre polyéther tel que le PEG, le PPG et le PTMG. Ces copolymères n'entrent pas dans le champ de notre invention et sont, bien entendu, exclus en tant que tels.

Le document WO04/037898 a pour objet un copolymère à blocs PA et blocs PE dont les blocs PA sont des copolyamides pouvant être du type PAX1.Y1/X2.Y2 ou PAX1.Y1/Z, X1 et X2 étant des diamines, Y1 et Y2 étant des diacides et Z étant un lactame ou un aminoacide. Ces copolymères n'entrent pas dans le champ de notre invention et sont, bien entendu, exclus en tant que tels.

La Société déposante a découvert de façon surprenante une nouvelle classe de PEBA présentant des propriétés optiques améliorées en particulier une diminution de l'opacité des PEBA et/ou des propriétés mécaniques améliorées, en particulier une très bonne résistance à la fatigue dynamique.

La présente invention a donc pour objet un copolymère PAX.Y/PE comprenant des blocs polyamide PA alternant avec des blocs polyéther PE, les blocs PA étant constitués par des blocs homopolyamide PA X.Y, obtenus par polycondensation
- d'une diamine aliphatique linéaire ayant X atomes de carbone ;
- d'un diacide carboxylique ayant Y atomes de carbone choisi parmi les diacides aliphatiques linéaires ;
ledit copolymère étant caractérisé par le fait que :
- lesdits blocs PA sont à extrémités carboxyliques ;
- X est au moins égal à 4, de préférence au moins égale à 6 ;
- Y est au moins égal à 10, de préférence au moins égale à 12 ;
- lesdits blocs PE :
   (i) de préférence, sont soit des blocs PE à extrémités hydroxyliques, autrement appelés des blocs PE diols de telle sorte que les liaisons entre les blocs PA à extrémités carboxyliques et les blocs PE diols sont des liaisons ester ;
   (ii) de préférence, sont soit des blocs PE à extrémités NH2 dans le cas où Y a un nombre d'atomes de carbone supérieur à 14, de telle sorte que les liaisons entre les blocs PA à extrémités carboxyliques et les blocs PE à extrémités NH2 sont des liaisons amide ;
   (iii) comprenant 0 à 39% en poids de PO3G et/ou de PEG et 100 à 61% en poids de polyéther, différent du PO3G ou du PEG, (% en poids exprimé par rapport au poids total du copolymère) ;
   caractérisé en ce que (iv) la cristallinité du bloc PAX.Y est > à la cristallinité d'un bloc PA12 de même taille et/ou (v) la séparation de phase PA/PE dudit copolymère PAX.Y/PE est > à celle d'un copolymère PA12/PTMG constitué de blocs en PA12 de même taille que les blocs PA X.Y dudit copolymère PAX.Y/PE et de blocs en PTMG de même taille que les blocs PE du copolymère PAX.Y/PE,
   caractérisé en ce que X + Y = 24 avec des blocs PA en PA10.14 ou en PA6.18, ou en ce que X + Y = 22 avec des blocs PA en PA10.12, ou en ce que X + Y = 20 avec des blocs PA en PA6.14 ou en PA10.10.

Comme diacides carboxyliques ayant Y atomes de carbone, on peut citer l'acide sébacique, l'acide dodécanedicarboxylique, l'acide octadécanedicarboxylique ;
Comme diamines aliphatiques linéaires ayant X atomes de carbone, on peut citer la tétraméthylène diamine, l'hexaméthylènediamine et la 1,10-décaméthylènediamine.

Les polyamides PAX.Y ci-dessous résultent de la condensation de la diamine X et du diacide Y, tel que :
- PA6.14 : hexaméthylène diamine et acide 1,12-dodécanedicarboxylique.
- PA6.18 : hexaméthylène diamine et acide 1,16-hexadécanedicarboxylique.
- PA10.10 : 1,10-décaméthylènediamine et acide sébacique.
- PA10.12 : 1,10-décaméthylènediamine et acide 1,10-décanedicarboxylique.
- PA10.14 : 1,10-décaméthylènediamine et acide 1,12-dodécane dicarboxylique.

Les blocs polyéther du copolymère PEBA de l'invention sont avantageusement issus d'au moins un polyalkylène éther polyol, notamment un polyalkylène éther diol et plus particulièrement choisi parmi le polypropylène glycol (PPG), le polytétraméthylène glycol (PTMG), leurs mélanges et leurs copolymères. De préférence, on choisira le PTMG.

Les blocs PE peuvent comprendre un mélange de blocs PE ou être un copolymère de polyéther. Dans ce cas, ils comprennent 0-39% en poids de PO3G et/ou de PEG et 100-61%, en poids de polyéther(s) différent(s) du PO3G ou du PEG, (poids par rapport au poids des blocs PE).

Les blocs PE ne sont jamais majoritaire en PEG et ne comprennent jamais plus que 39% en poids de PO3G (poids par rapport au poids des blocs PE).

Selon un mode de réalisation, le copolymère est caractérisé en ce que les 100 à 61% de polyéther en (iii) sont choisis parmi le PTMG, le PPG, leurs mélanges et leurs copolymères.

Les blocs polyéther du copolymère PEBA selon la présente invention peuvent également être des séquences polyoxyalkylène à bouts de chaînes NH₂, de telles séquences pouvant être obtenues par cyanoacétylation de séquences polyoxyalkylène alpha-oméga dihydroxylés aliphatiques appelées polyétherdiols. Plus particulièrement on pourra utiliser les Jeffamines (Par exemple Jeffamine® D400, D2000, ED 2003, XTJ 542, produits commerciaux de la société Huntsman. Voir également brevets JP 2004346274, JP 2004352794 et EP1482011).

La masse moléculaire moyenne en nombre d'un copolymère selon la présente invention est avantageusement comprise entre 5000 et 50000, de préférence entre 10000 et 30000.

La masse moléculaire moyenne en nombre des blocs PA est avantageusement comprise entre 500 et 10000, de préférence entre 600 et 7000, encore plus avantageusement entre 1500 et 6000.

La masse moléculaire moyenne en nombre des blocs PE est avantageusement comprise entre 250 et 5000, de préférence entre 250 et 2000, encore plus avantageusement entre 350 et 1000.

Les blocs PA représentent avantageusement entre 5 et 95, de préférence entre 10 et 95 % en poids de la somme des blocs PA et des blocs PE du copolymère de la présente invention.

L'invention a également pour objet un procédé de préparation d'un copolymère tel que défini plus haut, en plusieurs étapes, caractérisé par le fait que :
- dans une première étape, on prépare les blocs polyamide PA par polycondensation
   ∘ de la diamine aliphatique linéaire ayant X atomes de carbone ;
   ∘ du diacide carboxylique ayant Y atomes de carbone ;et
   ∘ en présence d'un limiteur de chaîne choisi parmi les diacides carboxyliques ; puis
- dans une seconde étape, on fait réagir les blocs polyamide PA obtenus avec des blocs polyéther PE, en présence d'un catalyseur.

La méthode générale de préparation en deux étapes des copolymères PEBA de l'invention ayant des liaisons ester entre les blocs PA et les blocs PE est connue et est décrite, par exemple, dans le brevet français FR 2 846 332. La méthode générale de préparation des copolymères PEBA de l'invention ayant des liaisons amide entre les blocs PA et les blocs PE est connue et décrite, par exemple dans le brevet européen EP 1 482 011.

La réaction de formation du bloc PA se fait habituellement entre 180 et 300°C, de préférence de 200 à 290°C, la pression dans le réacteur s'établit entre 5 et 30 bars, et on la maintient environ 2 à 3 heures. On réduit lentement la pression en mettant le réacteur à la pression atmosphérique, puis on distille l'eau excédentaire par exemple pendant une heure ou deux.

Le polyamide à extrémités acide carboxylique ayant été préparé, on ajoute ensuite le polyéther et un catalyseur. On peut ajouter le polyéther en une ou plusieurs fois, de même pour le catalyseur. Selon une forme avantageuse, on ajoute d'abord le polyéther, la réaction des extrémités OH du polyéther et des extrémités COOH du polyamide commence avec formation de liaisons ester et élimination d'eau. On élimine le plus possible l'eau du milieu réactionnel par distillation, puis on introduit le catalyseur pour achever la liaison des blocs polyamides et des blocs polyéthers. Cette deuxième étape s'effectue sous agitation, de préférence sous un vide d'au moins 6 mm Hg (800 Pa) à une température telle que les réactifs et les copolymères obtenus soient à l'état fondu. A titre d'exemple, cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible.

L'invention est aussi relative à un procédé de préparation d'un copolymère tel que défini ci-dessus caractérisé en ce que l'on réalise une polycondensation en une seule étape :
- de la diamine aliphatique linéaire ayant X atomes de carbone ;
- en présence d'un limiteur de chaîne choisi parmi les diacides carboxyliques ;
- en présence de blocs polyéthers PE ; et
- en présence d'un catalyseur pour la réaction entre les blocs PE et les blocs PA.

Quelque soit le procédé de fabrication du copolymère, en une seule étape ou en plusieurs étapes:
- le procédé est caractérisé par le fait que l'on peut utiliser comme limiteur de chaîne le diacide carboxylique ayant Y atomes de carbone, qui est introduit en excès par rapport à la stoechiométrie de la diamine ;
- Le procédé est caractérisé par le fait que l'on peut utiliser, comme catalyseur, un dérivé d'un métal choisi dans le groupe formé par le titane, le zirconium et l'hafnium ou un acide fort tel que l'acide phosphorique ou l'acide borique ;
- Le procédé est caractérisé par le fait que l'on peut conduire la polycondensation à une température de 180 à 300°C ;
- Le catalyseur est défini comme étant tout produit permettant de faciliter la liaison des blocs polyamide et des blocs polyéther par estérification ou par amidification. Le catalyseur d'estérification est avantageusement un dérivé d'un métal choisi dans le groupe formé par le titane, le zirconium et l'hafnium ou encore un acide fort tel que l'acide phosphorique ou l'acide borique. Des exemples de catalyseurs sont ceux décrits dans les brevets US 4 331 786, US 4 115 475, US 4 195 015, US 4 839 441, US 4 864 014, US 4 230 838 et US 4 332 920.
- On pourra également ajouter pendant la synthèse, au moment jugé le plus opportun, une ou plusieurs molécules utilisées comme anti-oxydant, par exemple l'Irganox® 1010 ou l'Irganox® 245.

La présente invention a également pour objet un article façonné, pouvant être avantageusement transparent ou translucide, tel que par exemple fibre, tissu, film, feuille, jonc, tube, toute pièce injectée (pièces de semelle de chaussure, etc...) comprenant les copolymères tels que définis ci-dessus.

L'invention se rapporte également à l'utilisation d'un copolymère PAX.Y/PE évoqué plus haut pour fabriquer un objet dont les propriétés mécaniques sont améliorées par rapport au même objet fabriqué avec un copolymère à blocs PA en PA12 et à blocs PE en PTMG, sachant que :
- la taille des blocs PA desdits copolymères PAX.Y/PE et PA12/PTMG est la même ou sensiblement la même et la taille des blocs PE desdits copolymères PAX.Y/PE et PA12/PTMG est la même ou sensiblement la même; et/ou
- la cristallinité du bloc PAX.Y est > à la cristallinité d'un bloc PA12 de même taille et/ou la séparation de phase PA/PE dudit copolymère PAX.Y/PE est > à celle d'un copolymère PA12/PTMG constitué de blocs en PA12 de même taille que les blocs PA X.Y dudit copolymère PAX.Y/PE et de blocs en PTMG de même taille que les blocs PE du copolymère PAX.Y/PE.

Les exemples suivants illustrent la présente invention sans toutefois en limiter la portée.

### Exemple 1 : Préparation de copolymère à blocs polyamide 6.18 et à blocs issus de polytétraméthylène éther glycol : abrégé PA 6.18-PTMG

On a préparé un PEBA à partir de blocs PA 6.18 de masse molaire 2000 g/mol et de blocs PTMG de masse molaire 1000 g/mol selon le mode opératoire suivant :
Les monomères suivants sont introduits dans un autoclave équipé d'un agitateur de façon à obtenir des blocs PA 6.18: 5 kg d'hexaméthylène diamine, 16,9 kg d'acide octadécanedioïque. Le mélange ainsi formé est mis sous atmosphère inerte et chauffé jusqu'à ce que la température atteigne 250 °C et 32 bar de pression. Après un maintien de 1h, on effectue ensuite une opération de détente de 1h pour revenir à la pression atmosphérique.

Le polytétraméthylène glycol de masse 1000 g/mol (10.22 kg) et Zr(OBu)₄ (30 g) sont ensuite ajoutés dans le réacteur pour terminer la polymérisation à 240°C sous pression absolue de 8 mbar (soit 800 Pa).

Le produit final PA 6.18-PTMG a une viscosité inhérente de 1,4 dl/g.

Le moulage par injection de plaques 100*100*2 mm confirme les propriétés optiques améliorées du produit avec une transmission à 460 nm de 59 %, à 560 nm de 74 % et à 700 nm de 82 %, une opacité d'environ 20 % et un haze de 11, que l'on peut comparer aux valeurs obtenues pour un copolymère de même taille de bloc mais sur base PA 12 et PE = PTMG, respectivement 29, 43, 58, 26 et 30.

### Exemple 2 : Préparation de copolymère à blocs polyamide 10.14 et à blocs issus de polytétraméthylène éther glycol : abrégé PA 10.14-PTMG

On a préparé un PEBA à partir de blocs PA 10.14 de masse molaire 5000 g/mol et de blocs PTMG de masse molaire 650 g/mol selon le mode opératoire précédent avec cependant comme diamine la 1,10-décaméthylènediamine (11,95 kg), comme diacide l'acide 1,12-dodécane dicarboxylique (19,4 kg) et le polytétraméthylène glycol (3,7 kg).

Le produit final PA 10.14-PTMG a une viscosité inhérente de 1,28 dl/g.

Le moulage par injection de plaques 100*100*2 mm confirme les propriétés optiques améliorées du produit avec une transmission à 460 nm de 49,5 %, à 560 nm de 62,9 % et à 700 nm de 71,7 % (mesures faites selon ASTM D 1003), une opacité d'environ 20 % (mesure faite selon ASTM D 1003) et un haze de 11 (mesure faite selon ISO 2814), que l'on peut comparer aux valeurs obtenues pour un copolymère de même taille de blocs PA et de même taille de blocs PE respectivement mais sur base PA 12 et PTMG, lesdites valeurs étant respectivement 14, 23, 35, non mesurée et 25.

Il a également été observé que les propriétés thermiques, en particulier le point de fusion de la phase PA, peuvent être plus élevées que dans le cas d'un copolymère PA 12/PTMG et ce, pour une même masse molaire du bloc PA et du bloc PE. En particulier, un copolymère PEBA 6.14/PTMG avec un bloc PA 6.14 de masse 5000 g/mol et un bloc PTMG de 650 g/mol a un point de fusion de 196-206°C, alors qu'un copolymère PEBA de type PA12/PTMG de même taille de blocs a un point de fusion de 172°C.

### Exemple 3 : Préparation de copolymère à blocs polyamide 6.14 et à blocs issus de polytétraméthylène éther glycol : abrégé PA 6.14-PTMG

On a préparé un PEBA à partir de blocs PA 6.14 de masse molaire 5000 g/mol et de blocs PTMG de masse molaire 650 g/mol selon le mode opératoire précédent avec cependant comme diamine la 1,6-hexaméthylènediamine (13,2 kg), comme diacide l'acide 1,12-dodécane dicarboxylique (31,6 kg) et le polytétraméthylène glycol (5,3 kg). Le produit final PA 6.14-PTMG a une viscosité inhérente de 1,44 dl/g.
Le module de flexion du produit ainsi obtenu (après conditionnement de 14 jours à 23°C et 50% d'humidité relative) a été mesuré à 680 MPa, que l'on peut comparer au module de flexion de 380 MPa pour un copolymère de même taille de blocs PA et de même taille de blocs PE respectivement mais sur base PA 12 et PTMG. Bien que beaucoup plus rigide, le nouveau produit ne casse pas après 150,000 cycles lors d'un test de fatigue en flexion à -10 °C (test de Ross Flex).

## Revendications

1. Copolymère PAX.Y/PE comprenant des blocs polyamide PA alternant avec des blocs polyéther PE, les blocs PA étant constitués par des blocs homopolyamide PA X.Y, obtenus par polycondensation
- d'une diamine aliphatique linéaire ayant X atomes de carbone ;
- d'un diacide carboxylique ayant Y atomes de carbone choisi parmi les diacides aliphatiques linéaires ;
ledit copolymère étant **caractérisé par le fait que** :
- lesdits blocs PA sont à extrémités carboxyliques ;
- X est au moins égal à 4, de préférence au moins égale à 6 ;
- Y est au moins égal à 10, de préférence au moins égale à 12 ;
- lesdits blocs PE :
(i) de préférence, sont soit des blocs PE à extrémités hydroxyliques, autrement appelés des blocs PE diols de telle sorte que les liaisons entre les blocs PA à extrémités carboxyliques et les blocs PE diols sont des liaisons ester ;
(ii) de préférence, sont soit des blocs PE à extrémités NH₂ dans le cas où Y a un nombre d'atomes de carbone supérieur à 14, de telle sorte que les liaisons entre les blocs PA à extrémités carboxyliques et les blocs PE à extrémités NH₂ sont des liaisons amide ;
(iii) comprenant 0 à 39% en poids de PO3G et/ou de PEG et 100 à 61% en poids de polyéther, différent du PO3G ou du PEG,(% en poids exprimé par rapport au poids total du copolymère) ;
**caractérisé en ce que** (iv) la cristallinité du bloc PAX.Y est > à la cristallinité d'un bloc PA12 de même taille et/ou (v) la séparation de phase PA/PE dudit copolymère PAX.Y/PE est > à celle d'un copolymère PA12/PTMG constitué de blocs en PA12 de même taille que les blocs PA X.Y dudit copolymère PAX.Y/PE et de blocs en PTMG de même taille que les blocs PE du copolymère PAX.Y/PE,
**caractérisé en ce que** X + Y = 24 avec des blocs PA en PA10.14 ou en PA6.18, ou **en ce que** X + Y = 22 avec des blocs PA en PA10.12, ou **en ce que** X + Y = 20 avec des blocs PA en PA6.14 ou en PA10.10.

2. Copolymère selon la revendication 1, **caractérisé en ce que** les 100 à 61% de polyéther en (iii) sont choisis parmi le PTMG, le PPG ou leurs mélanges, de préférence ledit polyéther est le PTMG.

3. Copolymère selon l'une des revendications précédentes, **caractérisé par le fait que** la masse moléculaire moyenne en nombre des blocs PA est comprise entre 500 et 10000, de préférence entre 600 et 7000, encore plus avantageusement entre 1500 et 6000.

4. Copolymère selon l'une des revendications précédentes, **caractérisé par le fait que** la masse moléculaire moyenne en nombre des blocs PE est comprise entre 250 et 5000, de préférence entre 250 et 2000, encore plus avantageusement entre 350 et 1000.

5. Copolymère selon l'une des précédentes, **caractérisé par le fait que** la masse moléculaire moyenne en nombre dudit copolymère est comprise entre 5000 et 50000, de préférence entre 10000 et 30000.

6. Copolymère selon l'une des revendications précédentes, **caractérisé par le fait que** les blocs PA représentent avantageusement entre 5 et 95%, de préférence entre 10 et 95% en poids de la somme des blocs PA et des blocs PE dudit copolymère.

7. Procédé de préparation d'un copolymère tel que défini à l'une des revendications précédentes, **caractérisé par le fait que** :
- dans une première étape, on prépare les blocs polyamide PA par polycondensation
∘ de la diamine aliphatique linéaire ayant X atomes de carbone ;
∘ du diacide choisi parmi les diacides carboxyliques ayant Y atomes de carbone ; et
∘ en présence d'un limiteur de chaîne choisi parmi les diacides carboxyliques ; puis
- dans une seconde étape, on fait réagir les blocs polyamide PA obtenus avec des blocs polyéther PE, en présence d'un catalyseur.

8. Procédé de préparation d'un copolymère tel que défini à l'une des revendications 1 à 6, **caractérisé par le fait que** l'on conduit une polycondensation en une étape
- de la diamine aliphatique linéaire ayant X atomes de carbone ;
- en présence d'un limiteur de chaîne choisi parmi les diacides carboxyliques ;
- en présence de blocs polyéthers PE ; et
- en présence d'un catalyseur pour la réaction entre les blocs PE et les blocs PA.

9. Procédé de préparation selon l'une des revendications 7 et 8, **caractérisé par le fait que** l'on utilise comme limiteur de chaîne le diacide carboxylique ayant Y atomes de carbone, qui est introduit en excès par rapport à la stoechiométrie de la diamine.

10. Procédé de préparation selon l'une des revendications 7 à 9, **caractérisé par le fait que** l'on utilise, comme catalyseur, un dérivé d'un métal choisi dans le groupe formé par le titane, le zirconium et l'hafnium ou un acide fort tel que l'acide phosphorique ou l'acide borique.

11. Procédé de préparation selon l'une des revendications 7 à 10, **caractérisé par le fait que** l'on conduit la polycondensation à une température de 180 à 300°C.

12. Article façonné, tel que fibre, tissu, film, feuille, jonc, tube, pièce injectée, par exemple pièce de semelle de chaussure, comprenant le copolymère tel que défini à l'une des revendications 1 à 6.

13. Utilisation d'un copolymère PAX.Y/PE selon l'une des revendications 1 à 6 pour fabriquer un objet dont les propriétés mécaniques sont améliorées par rapport au même objet fabriqué avec un copolymère à blocs PA en PA12 et à blocs PE en PTMG, sachant que :
- la taille des blocs PA desdits copolymères PAX.Y/PE et PA12/PTMG est la même ou sensiblement la même et la taille des blocs PE desdits copolymères PAX.Y/PE et PA12/PTMG est la même ou sensiblement la même; et/ou
- la cristallinité du bloc PAX.Y est > à la cristallinité d'un bloc PA12 de même taille et/ou la séparation de phase PA/PE dudit copolymère PAX.Y/PE est > à celle d'un copolymère PA12/PTMG constitué de blocs en PA12 de même taille que les blocs PA X.Y dudit copolymère PAX.Y/PE et de blocs en PTMG de même taille que les blocs PE du copolymère PAX.Y/PE.

## Patentansprüche

1. Copolymer PAX.Y/PE, umfassend Blöcke von Polyamid PA alternierend mit Blöcken von Polyether PE, wobei die Blöcke PA aus Blöcken von Homopolyamid PA X.Y bestehen, erhalten durch Polykondensation
- eines linearen aliphatischen Diamins mit X Kohlenstoffatomen;
- einer Dicarbonsäure mit Y Kohlenstoffatomen, ausgewählt aus linearen aliphatischen Disäuren;
wobei das Copolymer **dadurch gekennzeichnet ist, dass**:
- die Blöcke PA Carboxyltermini aufweisen;
- X mindestens gleich 4 ist, vorzugsweise mindestens gleich 6;
- Y mindestens gleich 10 ist, vorzugsweise mindestens gleich 12;
- die Blöcke PE:
(i) entweder vorzugsweise Blöcke PE mit Hydroxyltermini, anders genannt Blöcke von PE-Diolen, derart sind, dass die Bindungen zwischen den Blöcken PA mit Carboxyltermini und den Blöcken von PE-Diolen Esterbindungen sind;
(ii) oder vorzugsweise Blöcke PE mit NH₂-Termini, in dem Fall, wo Y eine Anzahl von Kohlenstoffatomen größer als 14 aufweist, derart sind, dass die Bindungen zwischen den Blöcken PA mit Carboxytermini und den Blöcken PE mit NH₂-Termini Amidbindungen sind;
(iii) umfassend 0 bis 39 Gew.-% PO3G und/oder PEG und 100 bis 61 Gew.-% Polyether, verschieden von PO3G oder von PEG (Gew.-% ausgedrückt bezogen auf das Gesamtgewicht des Copolymers);
**dadurch gekennzeichnet, dass** (iv) die Kristallinität des Blocks PAX.Y > ist als die Kristallinität eines Blocks PA12 mit derselben Größe und/oder (v) die Trennung der Phase PA/PE des Copolymers PAX.Y/PE > ist als jene eines Copolymers PA12/PTMG, bestehend aus Blöcken von PA12 mit derselben Größe wie die Blöcke PA X.Y des Copolymers PAX.Y/PE und aus Blöcken von PTMG mit derselben Größe wie die Blöcke PE des Copolymers PAX.Y/PE,
**dadurch gekennzeichnet, dass** X + Y = 24 bei den Blöcken PA von PA10.14 oder von PA6.18, oder dadurch, dass X + Y = 22 bei den Blöcken PA von PA10.12, oder dadurch, dass X + Y = 20 bei den Blöcken PA von PA6.14 oder von PA10.10.

2. Copolymer nach Anspruch 1, **dadurch gekennzeichnet, dass** die 100 bis 61 % Polyether in (iii) ausgewählt sind aus PTMG, PPG oder ihren Mischungen, wobei der Polyether vorzugsweise PTMG ist.

3. Copolymer nach einem der vorhergehenden Ansprüche, **dadurch gekennzeichnet, dass** die zahlenmittlere Molekularmasse der Blöcke PA zwischen 500 und 10000, vorzugsweise zwischen 600 und 7000, noch vorteilhafter zwischen 1500 und 6000, beträgt.

4. Copolymer nach einem der vorhergehenden Ansprüche, **dadurch gekennzeichnet, dass** die zahlenmittlere Molekularmasse der Blöcke PE zwischen 250 und 5000, vorzugsweise zwischen 250 und 2000, noch vorteilhafter zwischen 350 und 1000, beträgt.

5. Copolymer nach einem der vorhergehenden Ansprüche, **dadurch gekennzeichnet, dass** die zahlenmittlere Molekularmasse des Copolymers zwischen 5000 und 50000, vorzugsweise zwischen 10000 und 30000, beträgt.

6. Copolymer nach einem der vorhergehenden Ansprüche, **dadurch gekennzeichnet, dass** die Blöcke PA vorteilhaft zwischen 5 und 95 Gew.-%, vorzugsweise zwischen 10 und 95 Gew.-%, der Summe der Blöcke PA und der Blöcke PE des Copolymers darstellen.

7. Verfahren zur Herstellung eines Copolymers, wie in einem der vorhergehenden Ansprüche definiert, **dadurch gekennzeichnet, dass**:
- in einem ersten Schritt Blöcke von Polyamid PA hergestellt werden durch Polykondensation
∘ eines linearen aliphatischen Diamins mit X Kohlenstoffatomen;
∘ einer Disäure, ausgewählt aus Dicarbonsäuren mit Y Kohlenstoffatomen; und
∘ in Anwesenheit eines Kettenreglers, ausgewählt aus Dicarbonsäuren; anschließend
- in einem zweiten Schritt die erhaltenen Blöcke von Polyamid PA mit Blöcken von Polyether PE in Anwesenheit eines Katalysators umgesetzt werden.

8. Verfahren zur Herstellung eines Copolymers, wie in einem der Ansprüche 1 bis 6 definiert, **dadurch gekennzeichnet, dass** eine Polykondensation durchgeführt wird in einem Schritt
- eines linearen aliphatischen Diamins mit X Kohlenstoffatomen;
- in Anwesenheit eines Kettenreglers, ausgewählt aus Dicarbonsäuren;
- in Anwesenheit von Blöcken von Polyether PE; und
- in Anwesenheit eines Katalysators für die Reaktion zwischen den Böcken PE und den Blöcken PA.

9. Herstellungsverfahren nach einem der Ansprüche 7 und 8, **dadurch gekennzeichnet, dass** als Kettenregler eine Dicarbonsäure mit Y Kohlenstoffatomen verwendet wird, die im Überschuss in Bezug auf die Stöchiometrie des Diamins eingebracht wird.

10. Herstellungsverfahren nach einem der Ansprüche 7 bis 9, **dadurch gekennzeichnet, dass** als Katalysator ein Derivat eines Metalls, ausgewählt aus der Gruppe gebildet von Titan, Zirconium und Hafnium, oder eine starke Säure, wie Phosphorsäure oder Borsäure, verwendet wird.

11. Herstellungsverfahren nach einem der Ansprüche 7 bis 10, **dadurch gekennzeichnet, dass** die Polykondensation bei einer Temperatur von 180 bis 300°C durchgeführt wird.

12. Formkörper, wie eine Faser, ein Gewebe, ein Film, eine Folie, ein Ring, ein Rohr, ein Spritzgussteil, beispielsweise ein Teil einer Schuhsohle, umfassend das Copolymer, wie in einem der Ansprüche 1 bis 6 definiert.

13. Verwendung eines Copolymers PAX.Y/PE nach einem der Ansprüche 1 bis 6, zur Herstellung eines Objekts, dessen mechanische Eigenschaften in Bezug auf das gleiche Objekt verbessert sind, das mit einem Copolymer mit Blöcken PA von PA12 und mit Blöcken PE von PTMG hergestellt ist, mit der Maßgabe, dass:
- die Größe der Blöcke PA der Copolymere PAX.Y/PE und PA12/PTMG gleich oder im Wesentlichen gleich ist und die Größe der Blöcke PE der Copolymere PAX.Y/PE und PA12/PTMG gleich oder im Wesentlichen gleich ist; und/oder
- die Kristallinität des Blocks PAX.Y > ist als die Kristallinität eines Blocks PA12 mit derselben Größe und/oder die Trennung der Phase PA/PE des Copolymers PAX.Y/PE > ist als jene eines Copolymers PA12/PTMG, bestehend aus Blöcken von PA12 mit derselben Größe wie die Blöcke PA X.Y des Copolymers PAX.Y/PE und aus Blöcken von PTMG mit derselben Größe wie die Blöcke PE des Copolymers PAX.Y/PE.

## Claims

1. Copolymer PAX.Y/PE comprising polyamide PA blocks alternating with polyether PE blocks, the PA blocks being composed of homopolyamide PAX.Y blocks obtained by polycondensation:
- of a linear aliphatic diamine having X carbon atoms;
- of a dicarboxylic acid having Y carbon atoms chosen from linear aliphatic diacids;
said copolymer being **characterized in that**:
- said PA blocks comprise carboxyl ends;
- X is at least equal to 4, preferably at least equal to 6;
- Y is at least equal to 10, preferably at least equal to 12;
- said PE blocks:
(i) preferably, are either PE blocks comprising hydroxyl ends, otherwise known as PE diol blocks, so that the bonds between the PA blocks comprising carboxyl ends and the PE diol blocks are ester bonds;
(ii) preferably, or are PE blocks comprising NH₂ ends in the case where Y has a number of carbon atoms of greater than 14, so that the bonds between the PA blocks comprising carboxyl ends and the PE blocks comprising NH₂ ends are amide bonds;
(iii) comprise from 0 to 39% by weight of PO3G and/or PEG and from 100 to 61% by weight of polyether other than PO3G or PEG (% by weight, expressed with respect to the total weight of the copolymer);
**characterized in that** (iv) the crystallinity of the PAX.Y block is > the crystallinity of a PA12 block of the same size and/or (v) the PA/PE phase separation of said copolymer PAX.Y/PE is > that of a copolymer PA12/PTMG composed of PA12 blocks of the same size as the PAX.Y blocks of said copolymer PAX.Y/PE and of PTMG blocks of the same size as the PE blocks of the PAX.Y/PE copolymer, **characterized in that** X + Y = 24 with PA blocks made of PA10.14 or made of PA6.18, or **in that** X + Y = 22 with PA blocks made of PA10.12, or **in that** X + Y = 20 with PA blocks made of PA6.14 or made of PA10.10.

2. Copolymer according to Claim 1, **characterized in that** the 100 to 61% of polyether in (iii) are chosen from PTMG, PPG or their blends; preferably, said polyether is PTMG.

3. Copolymer according to either of the preceding claims, **characterized in that** the number-average molecular weight of the PA blocks is between 500 and 10 000, preferably between 600 and 7000, more advantageously still between 1500 and 6000.

4. Copolymer according to one of the preceding claims, **characterized in that** the number-average molecular weight of the PE blocks is between 250 and 5000, preferably between 250 and 2000, more advantageously still between 350 and 1000.

5. Copolymer according to one of the preceding claims, **characterized in that** the number-average molecular weight of said copolymer is between 5000 and 50 000, preferably between 10 000 and 30 000.

6. Copolymer according to one of the preceding claims, **characterized in that** the PA blocks advantageously represent between 5 and 95% by weight, preferably between 10 and 95% by weight, of the sum of the PA blocks and PE blocks of said copolymer.

7. Process for the preparation of a copolymer as defined in one of the preceding claims, **characterized in that**:
- in a first stage, the polyamide PA blocks are prepared by polycondensation
∘ of the linear aliphatic diamine having X carbon atoms;
∘ of the diacid chosen from dicarboxylic acids having Y carbon atoms; and
∘ in the presence of a chain-limiting agent chosen from dicarboxylic acids; then
- in a second stage, the polyamide PA blocks obtained are reacted with polyether PE blocks in the presence of a catalyst.

8. Process for the preparation of a copolymer as defined in one of Claims 1 to 6, **characterized in that** a single-stage polycondensation is carried out:
- of the linear aliphatic diamine having X carbon atoms;
- in the presence of a chain-limiting agent chosen from dicarboxylic acids;
- in the presence of polyether PE blocks; and
- in the presence of a catalyst for the reaction between the PE blocks and the PA blocks.

9. Preparation process according to either of Claims 7 and 8, **characterized in that** use is made, as chain-limiting agent, of the dicarboxylic acid having Y carbon atoms, which is introduced in excess with respect to the stoichiometry of the diamine.

10. Preparation process according to one of Claims 7 to 9, **characterized in that** use is made, as catalyst, of a derivative of a metal chosen from the group formed by titanium, zirconium and hafnium or a strong acid, such as phosphoric acid or boric acid.

11. Preparation process according to one of Claims 7 to 10, **characterized in that** the polycondensation at carried out at a temperature from 180 to 300°C.

12. Shaped article, such as fiber, fabric, film, sheet, rod, pipe or injection-molded component, for example component of a shoe sole, comprising the copolymer as defined in one of Claims 1 to 6.

13. Use of a copolymer PAX.Y/PE according to one of Claims 1 to 6 in manufacturing an item, the mechanical properties of which are improved in comparison with the same item manufactured with a copolymer comprising PA blocks made of PA12 and comprising PE blocks made of PTMG, it being known that:
- the size of the PA blocks of said copolymers PAX.Y/PE and PA12/PTMG is the same or substantially the same and the size of the PE blocks of said copolymers PAX.Y/PE and PA12/PTMG is the same or substantially the same; and/or
- the crystallinity of the PAX.Y block is > the crystallinity of a PA12 block of the same size and/or the PA/PE phase separation of said copolymer PAX.Y/PE is > that of a copolymer PA12/PTMG composed of PA12 blocks of the same size as the PAX.Y blocks of said copolymer PAX.Y/PE and of PTMG blocks of the same size as the PE blocks of the PAX.Y/PE copolymer.
